# EUROPEAN PATENT APPLICATION

(11) **EP 1 675 113 A1**
(43) Date of publication of application: **28.06.2006**
(21) Application number: 05112178.8
(22) Date of filing: 14.12.2005
(51) Int. Cl.: G11B 7/095

(54) **Optical pickup tilt correction control unit and tilt correcting method**

(30) Priority: 27.12.2004 JP 2004376451
(71) Applicant: KABUSHIKI KAISHA TOSHIBA, Tokyo 105-8001 (JP)
(72) Inventor: Kon, Yoshitaka Toshiba Corpooration, Minato-ku, Tokyo,105-8001 (JP); Magome, Takahiro Toshiba Corpooration, Minato-ku, Tokyo,105-8001 (JP)
(74) Representative: Henkel, Feiler & Hänzel

(57) **Abstract**

An optical disc recording/reproducing apparatus (1) according to the present invention can adjust a tilt of an object lens within a short time, by laying an average offset component on a correction amount applied to a tilt correction coil, adding a step disturbance of optional polarity to a center value of the laid offset components, detecting an envelope or maximum value and a minimum value of a reproduced output, averaging the difference between the detected envelope or maximum value and the minimum value, and controlling the offset amount of an offset component to decrease the difference between the envelope or maximum value and the minimum value when a step disturbance is changed to a fixed value.

## Description

The present invention relates to an optical disc recording/reproducing apparatus (information recording/reproducing apparatus) which, records, reads and erases information on/from an optical disc able to record, reading out and erase information, by using a laser beam. More particularly, the invention is concerned with an optical pickup tilt correction control unit and a tilt correcting method.

An optical disc is widely used as a recording medium suitable for recording information. Various optical discs of different standards are proposed and used. By the recording capacity, these optical discs are classified into CD and DVD. By the uses, the discs are sorted into a read-only type containing prerecorded information (called a ROM), a write once type able to record information only once (called a -R), and a rewritable type able to record and erase information repeatedly (called a RAM or RW).

An optical disc recording/reproducing apparatus, which records information on optical discs of above-mentioned various standards or erasing or reproducing recorded information, includes a light transmitting system to transmit a laser beam with a fixed wavelength to a fixed position on the recording surface of an optical disc (a recording medium), a light receiving system to detect a laser beam reflected on an optical disc, a mechanical unit represented by a disc motor and a disc loading mechanism, a mechanical control (servo) system to control the light transmitting system, a light receiving system and mechanical unit, and a signal processing unit which supplies recording information and erasing signals to the light transmitting system, and reads out recorded information by the signal detected by a light receiving system.

The light transmitting system and light receiving system include an LD (Laser Diode) as a light source to emit a laser beam, and an object lens, which condenses a laser beam from the LD on the recording surface of an optical disc and captures a laser beam reflected on an optical disc.

The position and tilt angle of an object lens are always controlled by the serve system to follow securely a track or a record mark on an optical disc, but the tilt angle is different by the position between the inside diameter and outside diameter of an optical disc, caused by a warp of an optical disc (a recording medium). Thus, various mechanisms and methods have been proposed to compensate the amount of control of a servo system, especially the amount of tilt.

Jpn. Pat. Appln. KOKAI Publication No. 2004-118909 discloses an optical disc recording/reproducing apparatus using an optical pickup 2 with a tilt adjustment coil 6 to adjust the tilt of an object lens, and a tilt control method in the optical disc apparatus which detects a peak level of an RF signal obtained from the optical pickup 2 at several locations during one turn of a disk M, and adjusts the tilt of an object lens to decrease the unevenness of the detected levels.

However, in the tilt control method described in the above document, when the tilt of an object lens is changed one step in one direction and the unevenness at each level is decreased as a result, the tilt is judged adjusted in a correct direction and the tilt is changed one step in the same direction. If the unevenness at each level is increased as a result, the tilt is adjusted in an incorrect direction. In this case, the tilt is changed one step in the opposite direction. If the object lens is tilted to the state that the unevenness at each level is returned one step as a result, the tilt of the object lens is judged suitable for recording and reproducing.

Namely, in the method described in the above document, as the unevenness at each level cannot be judged unless the tilt of the object lens is changed, the changing direction cannot be specified. If the tilt exceeds the best point by changing only one step, whether the best point exists in that step cannot be determined. The step can be divided minutely to enable judgment, but a long time is required to converge on the best point.

According to an aspect of the present invention, there is provided an optical pickup tilt correction control unit having a tilt correction coil to adjust a tilt of an object lens, comprising:
an offset generating means for generating an average tilt in a tilt correction coil;
a step disturbance signal generating means for generating a step disturbance of optional polarity in a tilt correction coil at the center of the offset amount generated by the offset generating means;
an envelope detecting means for detecting an envelope of an output obtained by applying the step disturbance generated by the step disturbance generating means to a tilt correction coil;
a difference averaging means for detecting a difference between the envelops of the step disturbances generated by the step disturbance generating means; and
a tilt controlling means for controlling the offset amount of the tilt outputted from the offset generating means to decrease the signal difference, when the step disturbance generated by the step disturbance generating means is changed to a fixed value.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing an example of an optical pickup tilt correction control unit according to an embodiment of the prevent invention;
FIGS. 2A, 2B and 2C are graphs showing the relation between a lens tilt position during adjustment and an RF/TE signal corresponding to a step disturbance polarity, explaining the correction of a tilt (of an optical pickup) by the optical pickup tilt correction control unit shown in FIG. 1;
FIG. 3 is a flowchart showing an example of the tilt correcting operation of the optical pickup tilt correction control unit shown in FIG. 1;
FIG. 4 is a schematic diagram showing the relation between information areas on a disc on adjustment and optimization, explaining the correction of a tilt (of an optical pickup) by the optical pickup tilt correction control unit shown in FIG. 1; and
FIG. 5 is a schematic diagram showing another embodiment of the optical pickup tilt correction control unit of the optical disc recording/reproducing apparatus shown in FIG. 1.

Embodiment of the present invention will be explained hereinafter with reference to the accompanying drawings.

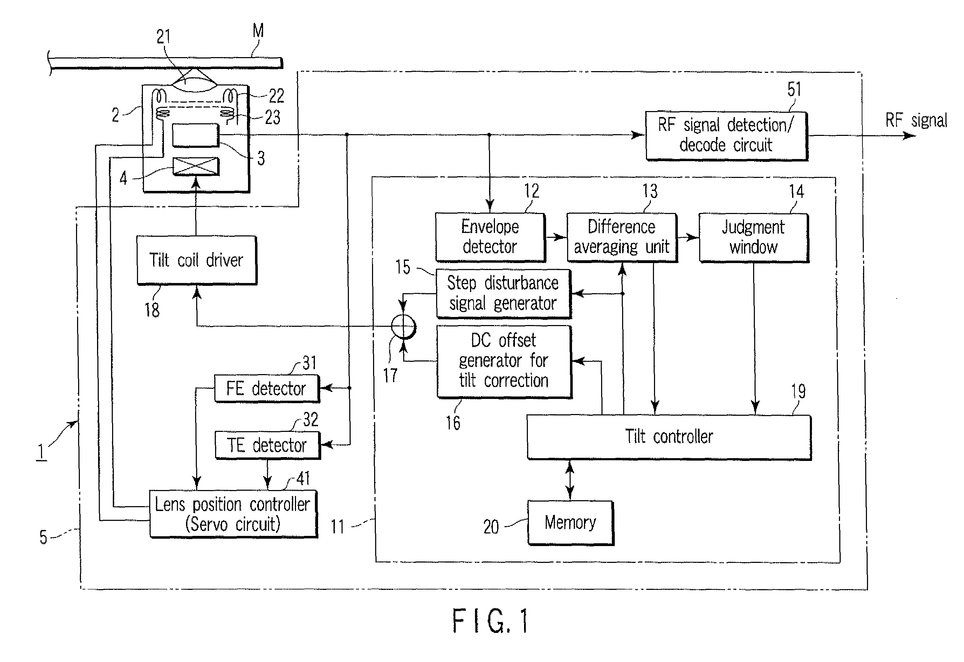

FIG. 1 is a schematic diagram showing an optical disc recording/reproducing apparatus having an optical pickup tilt correction control unit according to an embodiment of the prevent invention.

As shown in FIG. 1, an optical disc recording/reproducing apparatus 1 includes an optical pickup 2 for radiating a light beam with a fixed wavelength to the recording surface of a recording medium M.

The recording medium M is placed on a turntable (not shown) of a not-shown spindle motor, and turned at a fixed speed by the rotation of the spindle motor at a fixed speed, though not explained in detail. The optical pickup 2 is moved by a not-shown pickup sending motor in the diameter direction of the recording medium M, when recording, reproducing or erasing information.

The optical pickup 2 is incorporated with a not-shown laser diode to emit a laser beam (an optical beam) with a fixed wavelength of 780 nm or 650 nm for example, and an object lens 21 which condenses the optical beam emitted from the laser diode on the recording surface of the recording medium M, and captures a reflected optical beam from the recording surface (signal surface) of the recording medium M. A focus control coil 22 and a track control coil 23 to generate a thrust force for controlling the position of the object lens 21 are provided in proximity to the object lens 21 (or at a fixed position of the optical pickup 2).

The optical pickup 2 is also incorporated with an optical detector 3, which includes a monitoring optical detector to monitor the intensity of the optical beam emitted from the laser diode, and a signal optical detector to receive the optical beam reflected on the recording surface of the recording medium M and output a current or voltage corresponding to the optical beam intensity, a focus control coil 22 to displace the object lens 21 toward the surface of the recording medium M, a track control coil 23 to displace the object lens 21 in the diameter direction of the recording medium M, and a tilt correction driving coil 4 to adjust the angle of the object lens to the recording medium M.

The signal detected by the optical detector 3 is applied to a signal processor 5 provided in the later stage, which processes the signal usable as a data signal used for reproducing information and a control signal to place the object lens (optical pickup 2) at a fixed position to the recording surface of the recording medium M.

The signal processor 5 includes an RF signal detection/decode circuit 51 to process an RF signal or a data signal used mainly for reproducing information, a focus error detector 31 to detect a displacement of the position of the object lens 21 in direction of the surface of the optical disc M, a track error detector 32 to detect a displacement of the position of the object lens 21 in the diameter direction of the optical disc M, a servo circuit 41 to supply a focus control coil 22 and/or track control coil 23 with a control signal for controlling the position of the object lens 21 corresponding to the error amount detected by a respective error detector, and a tilt correction control unit 11 to correct the influence of a tilt of the optical disc M to the signal surface according to a method explained hereinafter.

The recording medium M is an optical disc of DVD standard, or a disc of various types, such as, DVD-RAM able to erase information and record new information (rewritable), DVD-R able to write new information and DVD-ROM with prerecorded information. The present invention is applicable also to a disc of CD standard and discs of new standards to be defined in the future.

The tilt correction control unit 11 has an envelope detector 12 to detect an envelope (RFRP) of an output signal corresponding to a RF signal emitted from the photodetector 3, a difference averaging unit 13 to average the envelope detected by the envelope detector 12 according to a step disturbance polarity, and a judgment window 14 which compares a difference between the output signals averaged by the difference averaging unit 13 or the signals obtained according to the polarity of step disturbances, with a fixed value, and judges whether the result of comparison is within a given range.

The tilt correction control unit 11 is connected to a step disturbance signal generator 15 to determine the amount of control to be supplied to the tilt correction driving coil 4, a tilt correction DC offset generator 16, an adder 17, a tilt coil drive 18, and a tilt controller 19. The tilt controller 19 is connected to a memory (storing means) 20.

The step disturbance signal generator 15 generates a step disturbance signal with a fixed amplitude, cycle and step number, under the control of the tilt controller 19. Therefore, the object lens is given a step disturbance changed to an optional polarity in positive and/or negative directions to a reference position. A level difference is superposed on the RF signal detected by the photodetector 3 (a specific difference is generated in the signal detected by the optical detector 3).

The tilt correction DC offset generator 16 sets the amount of change by steps of DC offset. Namely, the DC offset generator 16 generates a DC offset to be added to a step disturbance.

The tilt controller 19 compares a difference between the signals obtained by a step disturbance of an optional polarity, for generating a DC offset component generated in the tilt correction DC offset generator 16 and a step disturbance from the step disturbance signal generator 15 to be added to that component, with a fixed value. Namely, the tilt controller 19 specifies a DC offset polarity (a moving direction) generated by the tilt correction DC offset generator 16 based on the result of the comparison, that is, based on a judgment signal from the judgment window 14 and the signal averaged by step disturbances of optional polarities in the difference averaging unit 13. A signal to judge an adjustment by adding a step disturbance, an optimum value of tilt correction voltage, and a tilt correction voltage in several areas of a disc are held in a memory 20.

Next, a tilt correcting operation will be explained.

The tilt correction DC offset generator 16 generates a tilt of average size in the tilt correction driving coil 4. A step disturbance signal is laid stepwise on the generated DC offset at fixed intervals so that the lens tilt (center value) of the object lens is moved by the tilt controller 19. Therefore, the tilt correction driving coil 4 is supplied with a DC offset component of a specific size and an optional polarity disturbance component at the same time.

Namely, by supplying a DC offset component and an optional polarity disturbance component to the tilt correction driving coil 4, the amount of change in the condensing state caused by a lens tilt of an optical beam condensed on the optical disc M is converted by a fixed amount.

It is because the DC offset component and optional polarity disturbance component supplied to the coil 4 is added by the adder 17.

The driving current supplied to the coil 4 is set by the tilt coil drive 18 according to the instruction value (the amount of tilt) outputted from the adder 17. Namely, the operation of the tilt coil drive 18 is controlled by the signal from the tilt controller 19, and the tilt coil drive is capable of supplying a drive signal for adjusting the tilt to the tilt adjusting coil 4 incorporated in the optical pickup 2.

The tilt correction control according to the present invention supplies the tilt adjusting coil 4 with an offset component (DC) of optional size and a disturbance component of optional polarity, compares the level of a reproducing signal at the position where a tilt point is displaced by the same amount in the positive direction and negative direction, at an target position (hereinafter called a reference position) of each tilt point under adjustment obtained by moving an object lens at fixed intervals toward a target position of a tilt point (final target) more preferable than a target position of a first tilt point, and moves to the next reference position according to the difference. The adjustment data at the reference position of a tilt point where the difference of the level between the compared reproducing signals is smaller than a given value is held as data "able to optimize the optical axis of the emitted light from the object lens of the optical pickup with respect to a disc tilt."

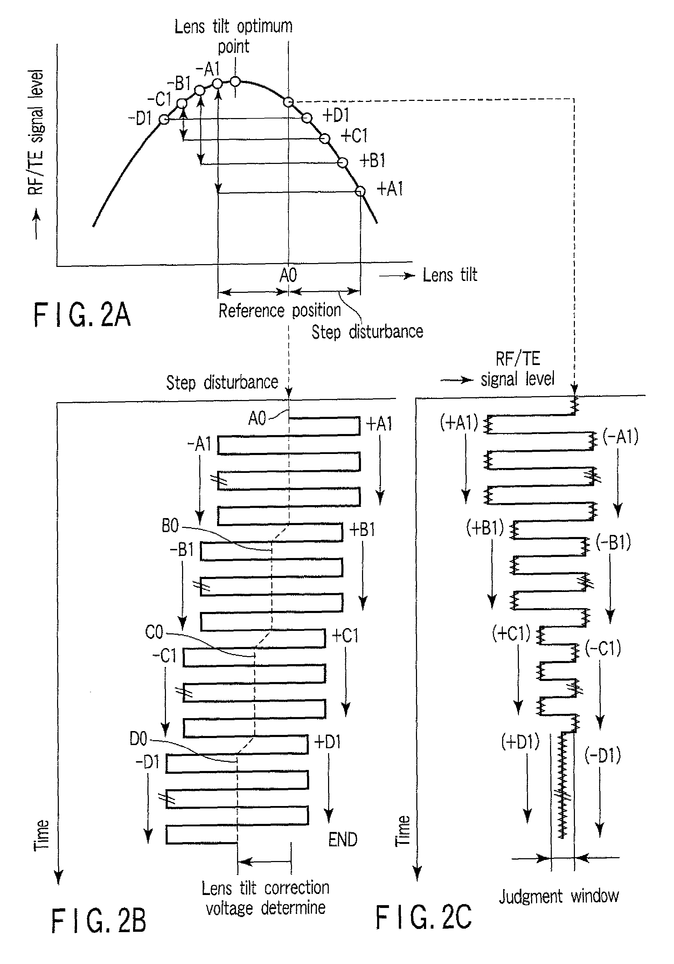

More specifically, when the relation between a lens tilt position and an RF (or TE track error) signal corresponding to a step disturbance polarity is obtained as shown in FIG. 2A, the judgment window 14 compares a given value (range) with the difference between the outputs of the difference averaging unit 13 at the points +A1 and -A1 in FIG. 2C. In this time, the tilt controller 19 applies a voltage B0 to the tilt control system through the tilt correction DC offset generator 16, and moves a lens tilt point from the first reference position A0 to the next reference position B0, as shown in FIG. 2B.

Then, as shown in FIG. 2B, the tilt controller 19 makes the step disturbance signal generator 15 output a fixed step disturbance data B1 with reference to the point B0 in the reproducing signal characteristic, applies the step disturbance polarity to the tilt control system through the adder 17, and moves the lens tilt point from the reference point B0 to +B1 and -B1.

FIG. 2A shows the lens tilt reference position and the positions displaced in the positive and negative directions. In FIG. 2A, the X-axis indicates the output voltage of the tilt correction DC offset generator 16 or the left and right positions taking first, the position of the lens tilt point as "0", and the corresponding adjustment data of the tilt controller 19, while the Y-axis indicates the largeness of the reproducing signal from the envelop detector 12.

For example, it is assumed that the tilt point of the lens tilt 6 before adjustment is at the point A0 in the reproducing signal in FIG. 2A and displaced from a preferable position with respect to a disk tilt.

The tilt controller 19 makes the step disturbance signal generator 15 output a fixed step disturbance data A1 by taking the point A0 as a first reference position, applies the step disturbance polarity to the tilt control system through the adder 17, and moves the lens tilt point from the reference point A0 to the points +A1 and -A1.

The tilt controller 19 takes in and stores the outputs of the difference averaging unit 13 at the points +A1 and -A1 in the memory 20. In this time, absolute values of the output voltage difference at the points A0 and +A1 and the output voltage difference at the points A0 and -A1 are equal.

Thereafter, the judgment window 14 compares a difference between the outputs of the difference averaging unit 13 at the points +A1 and -A1 in FIG. 2C, with a fixed value (range). The judgment window 14 reports to the tilt controller 19 that the output difference is larger than the fixed value in this example.

The tilt controller 19 applies a voltage B0 to the tilt control system through the tilt correction DC offset generator 16, and moves a lens tilt point from the first reference position A0 to the next reference position B0, as shown in FIG. 2B. In this time, the moving direction is toward the point A1 where the output of the difference averaging unit 13 is large, and the moving amount is a fixed tilt correction amount.

Next, as shown in FIG. 2B, the tilt controller 19 makes the step disturbance signal generator 15 output a fixed step disturbance data B1 by taking the point B0 on the reproducing signal characteristic as a reference position, applies the step disturbance polarity to the tilt control system through the adder 17, and moves the lens tilt point from the reference point B0 to the points +B1 and -B1.

The tilt controller 19 takes in and stores the outputs of the difference averaging unit 13 at the points +B1 and -B1 in the memory 20. In this time, absolute values of the output voltage difference at the points B0 and +B1 and the output voltage difference at the points B0 and -B1 are equal.

Thereafter, the judgment window 14 compares a difference between the outputs of the difference averaging unit 13 at the points +B1 and -B1 in FIG. 2C, with a fixed value (range). The judgment window 14 judges the output difference is larger than the fixed value (as a result of the comparison), and outputs it to the tilt controller 19.

The tilt controller 19 applies a voltage C0 to the tilt control system through the tilt correction DC offset generator 16, and moves a lens tilt point from the first reference position B0 to the next reference position C0, as shown in FIG. 2B. In this time, the moving direction is toward the point B1 where the output of the difference averaging unit 13 is large, and the moving amount is a fixed tilt correction amount.

Thereafter, similarly, the tilt controller 19 makes the step disturbance signal generator 15 output a fixed step disturbance data C1 by taking the point C0 on the reproducing signal characteristic as a reference position, applies the step disturbance polarity to the tilt control system through the adder 17, and moves the lens tilt point from the reference point C0 to the points +C1 and -C1.

The tilt controller 19 takes in and stores the outputs of the difference averaging unit 13 at the points +C1 and -C1 in the memory 20. In this time, absolute values of the output voltage difference at the points C0 and +C1 and the output voltage difference at the points C0 and -C1 are equal.

Thereafter, the judgment window 14 compares a difference between the outputs of the difference averaging unit 13 at the points +C1 and -C1 in FIG. 2C, with a fixed value (range). The judgment window 14 judges that the output difference is larger than the fixed value, and reports (outputs) it to the tilt controller 19.

The tilt controller 19 applies a voltage D0 to the tilt control system through the tilt correction DC offset generator 16, and moves a lens tilt point from the first reference position C0 to the next reference position D0, as shown in FIG. 2B. In this time, the moving direction is toward the point C1 where the output of the difference averaging unit 13 is large, and the moving amount is a fixed tilt correction amount.

Thereafter, the tilt controller 19 makes the step disturbance signal generator 15 output a fixed step disturbance data D1 by taking the point D0 on the reproducing signal characteristic as a reference position, applies the step disturbance polarity to the tilt control system through the adder 17, and moves the lens tilt point from the reference point D0 to the points +D1 and -D1.

The tilt controller 19 takes in and stores the outputs of the difference averaging unit 13 at the points +D1 and -D1 in the memory 20. In this time, absolute values of the output voltage difference at the points D0 and +D1 and the output voltage difference at the points D0 and -D1 are equal.

Then, the judgment window 14 compares a difference between the outputs of the difference averaging unit 13 at the points +D1 and -D1 in FIG. 2C, with a fixed value (range). The judgment window 14 judges that the output difference is larger than the fixed value, and reports it to the tilt controller 19.

The tilt controller 19 holds the adjustment data at the point D0, and optimizes the direction of the optical axis (axial line = chief ray) of the emitted light passing through the object lens of the optical pickup 2.

Namely, as described above, the adjustment accuracy can be increased by adjusting the axis of the light passing through the object lens based on the average value of the reproducing signal at each tilt point outputted from the difference averaging unit 13.

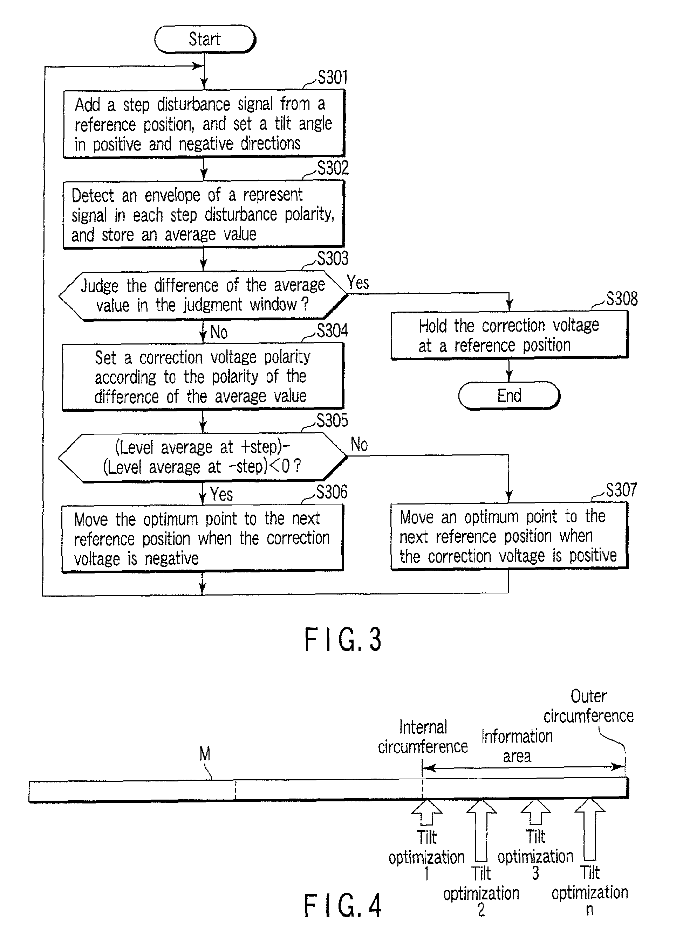

The method of adjusting the tilt point by the tilt controller 19 has been explained hereinbefore. The flow of the operation is shown in FIG. 3.

When a lens tilt is detected at a position out of the judgment window, the polarity (direction) of displacing a DC offset by one step is judged by:
(Level average at +step) - (Level average
at -step) < 0
Negative tilt correction voltage
(Level average at +step) - (Level average
at -step) > 0
Positive tilt correction voltage

More specifically, in step S 301, the tilt angle is changed by the disturbance signal to positive and negative directions.

In step S 302, the envelope of the RF signal obtained by the changed tilt angles is calculated and averaged.

Whether the difference between the averaged envelope output and the fixed value (reference value) exists within the judgment window (S 303) is judged. When the obtained difference is out of the judgment window range (No in S 303), the polarity of correction voltage is set according to the polarity of the averaged value difference (S 304).

The DC offset is shifted by one step according to the polarity (S 305, S 306, S 307), as described above.

FIG. 4 shows the concept of optimizing the tilt correction for each information area on a disc at the time of adjustment, by relating the tilt correction by the optical pickup tilt correction control unit explained in FIG. 1 to the radial direction of an optical disc.

The optical disc M is provided with a recording film on a resin base (or glass). Therefore, it is well known that the disc is accompanied by a warp, that is, the center portion (center hole portion) does not exist on the same plane when taking the outside diameter of a disk as a reference, for example. The warp is expressed by a numerical value in the specifications of a disc.

Therefore, as shown in FIG. 4, if the disc M is divided into several areas in the radius (radial direction) of the disc, the tilt correction is executed for each area calculated by the address information, the result of tilt correction in each area is stored in the memory, and a tilt point is adjusted immediately thereafter, readjustment is unnecessary even if the tilt point (amount) differs due to the optical pickup moving in the internal circumference or external circumference. The number n of divisions is 10, for example. The number may be over 10, or contrarily equal to or lower than 5.

Next, explanation will be given on an application example of adjustment of a tilt point.

During the reproducing operation, the read out data of the optical disc M is read and a tilt is corrected, while the read out data is outputted from a buffer memory (not shown). During the recording operation, the read out data of the disc M in the prerecorded area is read and a tilt is corrected, while the recording data is stored in a buffer memory (not shown) .

By applying the adjustment of a tilt point to the apparatus by using the tilt controller 19, optimum tilt correction is possible even if the components of the optical system are deformed by the change over time and the characteristic of the optical system is substantially changed or if the reference state of the tilt control system is changed.

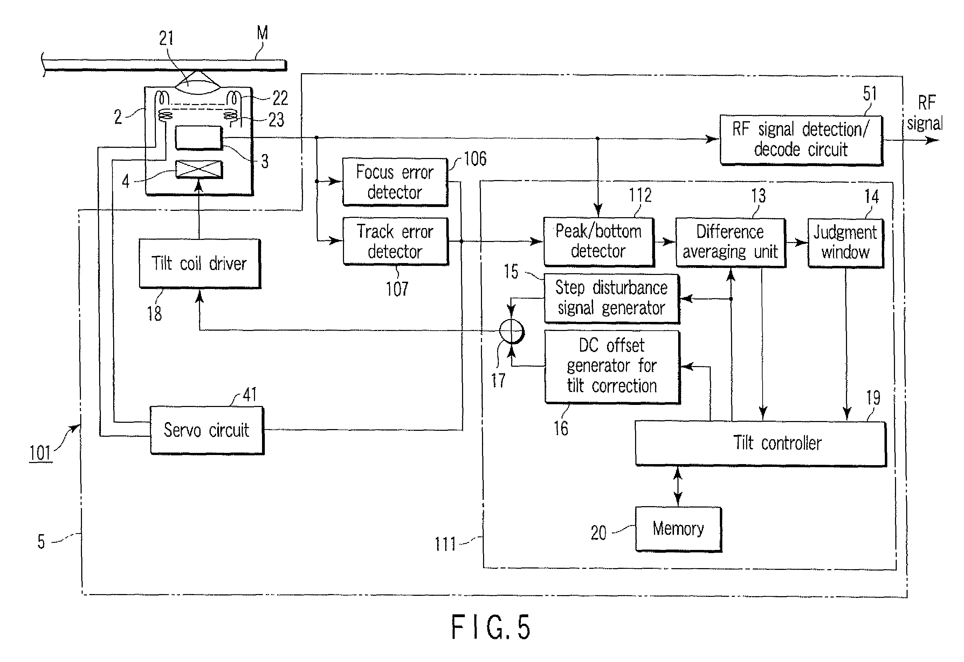

FIG. 5 shows another embodiment of the optical pickup tilt correction control unit of an optical disc recording/reproducing apparatus shown in FIG. 1. The same reference numerals are given to the same components as those in FIG. 1, and a detailed explanation will be omitted.

As shown in FIG. 5, the optical disc recording/reproducing apparatus 101 includes an optical pickup 2 for radiating a light with a fixed wavelength to the recording surface of the optical disc M.

The optical pickup 2 is incorporated with a not-shown laser diode to emit a laser beam (an optical beam) with a fixed wavelength, an object lens 21 to capture a an optical beam emitted from the laser diode and reflected on the recording surface of the optical disc, an optical detector 3 including a signal optical detector which receives the optical beam captured by the object lens 21 and outputs a current or voltage corresponding to the intensity of the optical beam, and a tilt correction driving coil 4 to adjust the angle of the object lens 3 to a recording medium M. A focus control coil 22 and a track control coil 23 to generate a thrust force for controlling the position of the object lens 21 are provided in proximity to the object lens 21 (or at a fixed position of the optical pickup 2).

The signal processor 5 includes an RF signal detection/decode circuit 51 to process an RF signal or a data signal used mainly for reading information, a focus error detector 106 to detect a displacement of the position of the object lens 21 in the direction of the surface of the optical disc M, a track error detector 107 to detect a displacement of the position of the object lens 21 in the diameter direction of the optical disc M, a servo circuit 41 to supply a focus control coil 22 and/or track control coil 23 with a control signal for controlling the position of the object lens 21 corresponding to the error amount detected by a respective error detector, and a tilt correction control unit 111 to correct the influence of a tilt of the optical disc M to the signal surface by referring to the output of at least one of the focus error detector and track error detector.

Namely, the tilt detection/correction system shown in FIG. 5 is characterized by detecting a tilt point from a peak (maximum) value and a bottom (minimum) value of a track error (TE), for example, compared with the detection system shown in FIG. 1 uses the RF signal for the detection. In this case, the actually obtained waveform is the same as that explained in FIG. 2A.

The process of correcting a tilt by the amount of tilt at the detected tilt point is the same as explained with reference to FIGS. 2A to 2C and FIG. 3, and detailed explanation will be omitted.

As explained hereinbefore, according to the present invention, an optimum tilt correction angle can be adjusted by the RF signal or TE signal without providing an exclusive tilt sensor, in the tilt correction of an optical pickup having a disc tilt correction mechanism for optimum correction of the axis of a light passing through an object lens of the optical pickup, with respect to an optical disc tilt (disk tilt) that is a problem in an optical disk recording/reproducing apparatus.

Namely, when changing the tilt of an object lens, the correction speed is increased and optimum correction is possible by detecting the RF envelope (RFRP) during reading out or the peak/bottom of a track error signal, when calculating a step disturbance centering around the offset and applying a fixed step disturbance to the tilt correction driving circuit, and then detecting the difference between the peak and bottom values of each step disturbance of optional polarity, and controlling the largeness of the tilt correction offset adding component to decrease the signal difference by the step disturbance up to a fixed value.

Further, according to the present invention, in the tilt correction to optimize the optical axis of light passing thorough the object lens of the optical pickup that is the optical axis of a main beam, an optimum tilt correction angle can be set in a sort time by using the RF signal (reproduced output) or TE (track error) signal, without providing an exclusive tilt sensor.

The present invention is not limited to the embodiments described hereinbefore. The invention may be embodied in other specific forms or modified without departing from its spirit or essential characteristics. Each embodiment may be appropriately combined as far as possible. In this case, the effect by combination will be obtained.

## Claims

1. An optical pickup tilt correction control unit (11) having a tilt correction coil to adjust a tilt of an object lens, **characterized by** comprising:
an offset generating means (16) for generating an average tilt in a tilt correction coil;
a step disturbance signal generating means (15) for generating a step disturbance of optional polarity in a tilt correction coil at the center of the offset amount generated by the offset generating means;
an envelope detecting means (12) for detecting an envelope of an output obtained by applying the step disturbance generated by the step disturbance generating means to a tilt correction coil;
a difference averaging means (13) for detecting a difference between the envelops of the step disturbances generated by the step disturbance generating means; and
a tilt controlling means (5) for controlling the offset amount of the tilt outputted from the offset generating means to decrease the signal difference, when a step disturbance generated by the step disturbance generating means is changed to a fixed value.

2. The tilt correction control unit according to claim 1, **characterized in that** the tilt controlling means (5) executes tilt correction at an optional position in the radius of a recording medium divided into areas, and stores the result of tilt correction in each area in a storing means.

3. The tilt correction control unit according to claim 1, **characterized in that** the difference averaging means (13) outputs a signal by averaging the step disturbances generated by the step disturbance generating means.

4. The tilt correction control unit according to claim 2, **characterized in that** the difference averaging means (13) outputs a signal by averaging the step disturbances generated by the step disturbance generating means.

5. The tilt correction control unit according to claim 1, **characterized in that** the tilt controlling means (5) compares the polarity of a disturbance of optional polarity generated by the step disturbance generating means with the polarity of a signal from the difference averaging means, and outputs a direction to move an offset.

6. The tilt correction control unit according to claim 2, **characterized in that** the tilt controlling means (5) compares the polarity of a disturbance of optional polarity generated by the step disturbance generating means with the polarity of a signal from the difference averaging means, and outputs a direction to move an offset.

7. An optical pickup tilt correction control unit (111) having a tilt correction coil to adjust a tilt of an object lens, **characterized by** comprising:
an offset generating means (16) for generating an average tilt in a tilt correction coil;
a step disturbance signal generating means (15) for generating a step disturbance of optional polarity in a tilt correction coil at the center of the offset amount generated by the offset generating means;
a peak/bottom detecting means for detecting (112) a maximum value and a minimum value of an reflected light beam from a recording medium obtained by applying a step disturbance generated by the step disturbance generating means to a tilt correction coil;
a difference averaging means (13) for detecting a maximum value and a minimum value of each step disturbance generated by the step disturbance generating means; and
a tilt controlling means (5) for controlling the offset amount of a tilt outputted from the offset generating means to decrease the signal difference, when a step disturbance generated by the step disturbance generating means is changed to a fixed value.

8. The tilt correction control unit according to claim 7, **characterized in that** the tilt controlling means (5) executes tilt correction at an optional position in the radius of a recording medium divided into areas, and stores the result of tilt correction in each area in a storing means.

9. The tilt correction control unit according to claim 7, **characterized in that** the difference averaging means (13) outputs a signal by averaging the step disturbances generated by the step disturbance generating means.

10. The tilt correction control unit according to claim 8, **characterized in that** the difference averaging means (13) outputs a signal by averaging the step disturbances generated by the step disturbance generating means.

11. The tilt correction control unit according to claim 7, **characterized in that** the tilt controlling means (5) compares the polarity of a disturbance of optional polarity generated by the step disturbance generating means with the polarity of a signal from the difference averaging means, and outputs a direction to move an offset.

12. The tilt correction control unit according to claim 9, **characterized in that** the tilt controlling means (5) compares the polarity of a disturbance of optional polarity generated by the step disturbance generating means with the polarity of a signal from the difference averaging means, and outputs a direction to move an offset.

13. A method of adjusting a tilt of an object lens, **characterized by** comprising:
laying an average offset component on a correction amount applied to a tilt correction coil;
adding a step disturbance of optional polarity to a center value of the laid offset components;
detecting an envelope or maximum value and a minimum value of a reproduced output;
averaging the difference between the detected envelope or maximum value and the minimum value; and
controlling the offset amount of an offset component to decrease the difference between the envelope or maximum value and the minimum value a the step disturbance is changed to a fixed value.
